Europäisches Patentamt

European Patent Office

Office européen des brevets

(11) Publication number: **0 069 086**
A2

# EUROPEAN PATENT APPLICATION

(21) Application number: **82830166.3**

(22) Date of filing: **10.06.82**

(51) Int. Cl.³: **F 16 H 21/36**

(30) Priority: **19.06.81 IT 490881U**
**19.06.81 IT 490981U**

(43) Date of publication of application: **05.01.83**
**Bulletin 83/1**

(84) Designated Contracting States: **AT BE CH DE FR GB LI**
**LU NL SE**

(71) Applicant: **AIREL ITALIANA S.r.l., Via Coronedi Berti, 2,**
**I-40137 Bologna (IT)**

(72) Inventor: **Pasquali, Mario, Via della Frasca,13,**
**I-40141 Bologna (IT)**
Inventor: **Grillini, Marco, Via Murri, 62, I-40137 Bologna**
**(IT)**

(74) Representative: **Rinaldi, Carlo, Studio Brevetti Nazionali**
**ed Esteri Via Rino Ruscello, 2, I-40134 Bologna (IT)**

(54) **Mechanism for the transformation of a rotary movement into a straight-line movement and vice-versa.**

(57) Mechanism for the transformation of a rotatory movement into an alternate straigt-line movement and vice-versa, comprising;

a shaft with pinion; a fixed ring with internal crown gear meshing with the pinion and with a pitch diameter twice the pitch diameter of the pinion;

first organs connected to an electric motor, designed to support in rotation the shaft of the pinion, in order to obtain an eccentricity between the axes of the said two shafts, equal to the pitch radius of the pinion;

second organs connected to the shaft with pinion, designed to motorise the rod of an expander according to an alternate straight-line movement, to distinguish an eccentricity between the axes of the shaft with pinion and the axis of the rod, equal to the said radius.

# MECHANISM FOR THE TRANSFORMATION OF A ROTATORY MOVEMENT INTO A STRAIGHT-LINE MOVEMENT AND VICE-VERSA.

The invention refers to a mechanism intended to transform a rotatory movement into a straight-line movement and vice-versa and in particular to a device intended to motorise a mobile pumping unit of a compressor comprising a rod, the end of which is integral with a certain number of pistons; the said rod moving in harmonic motion when the rotatory movement is uniform.

Traditional mechanisms of the aforesaid type consist of a crank, a connecting rod and a piston to which the connecting rod is hinged and which moves on a rectilinear guide formed by the inner surface of a cylinder. The piston of these devices is generally subject to orthogonal stress with respect to the straight-line path of its movement; such stress involving specific pressure on the inner surface of the cylinder, which causes wear on both the piston skirt and the inner surface of the cylinder.

More recent mechanisms have been designed in which the orthogonal stress, with repect to the piston path, is eliminated; these consist of a crown gear, realised in the inner surface of a ring; a pinion meshing with the said crown gear; the pitch diameter of the crown has a double measurement with respect to the pitch diameter of the pinion, the axis of which is supported in rotation and in eccentric position with respect to the crown by a shaft coaxial to the axis of the crown; the result being that the eccentricity is equal to the pitch radius of the pinion. The axis of the pinion is integral, with an eccentricity value the same as that already specified, with a pin which is in turn hinged to a rod, on a parallel axis to that of the pinion; in the said mechanism, the rod moves in harmonic motion, pulling the aforesaid shaft in a uniform rotatory movement.

All the known devices of the above-mentioned type are difficult and costly to construct, since the components are not easily assembled to obtain the desired mechanism and since the said mechanism is of little functional use and is unreliable.

This inventions is designed to remedy these problems. The invention, as characterised in the claims, solves the problem of creating a mechanism for the transformation of a rotatory movement into a straight-line movement and vice-versa, is easy to construct and assemble, very functional and reliable.

The advantages obtained thanks to this invention consist of the fact that the assembly of the parts comprising the mechanism is simple, as is disassembly in the case of replacement of broken parts.

The invention is explained below in greater detail, referring to the drawings which show two ways of carrying out the device.

- fig. 1 shows one way of carrying out the invention, in section according to the longitudinal axis of the device;

- fig. 2 shows a second way of carrying out the invention, in section according to the longitudinal axis of the invention.

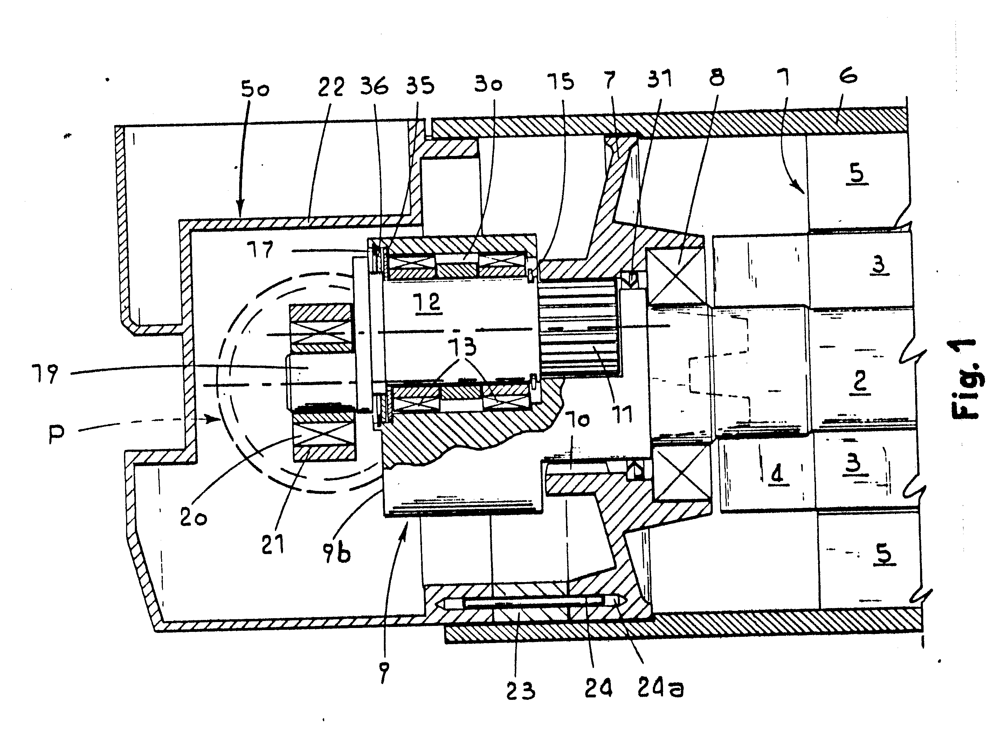

With reference to fig. 1, the electric motor is indicated by no. 1 and the shaft, the rotor, the cooling fan, the stator and the casing of the said motor (1) are indicated respectively by nos. 2,3,4,5 and 6; the said casing (6) comprising a tubular extrusion extending beyond the rotor (3) and being clamped (by means of stay rods not shown) to the casing (22) of a compressor (50), which will be mentioned later.

The part of the casing (6) protruding beyond the stator (5) has a fixed flange (7) which supports in rotation, by means of a bearing (8), a cylindrical body (9) coaxial to the shaft (2), to which it is made integral either by material continuity or by a cone coupling indicated by dashed line; a crown gear (10), coaxial to the shaft (2), is cut in the flange (7) in the opposite part to the housing for the bearing (8).

The cylindrical body (9) has an eccentric housing (30) which ends externally on one side corresponding to the head (9b) of the said cylindrical body (9) and on the other side by means of a lateral window (31).

A shaft (12), supported in rotation by the cylindrical body (9) by means of a pair of bearings (13) is positioned in the housing (30); the translation of the shaft (12) is prevented by piston rings (15,17) and by rings (35,36).

The shaft (12) is integral with a pinion (11) which partly protrudes from the cylindrical body (9) through the window (31) and engages itself with the said crown gear (10). The head of the shaft (12) not concerned with the pinion (11), is integral with a pin (19) mounted coaxially to the shaft (2) and hinged by means of rollers (20) with a rod (21), the ends of which are integral with other pistons P (shown by dashed lines in the drawings) of the compressor (50).

The proportioning of the mechanism in question foresees that the pitch diameter of the crown (10) is double that of the pitch diameter of the pinion (11), that the eccentricity of the axis of the shaft (12) with respect to the axis of the shaft (2) is equal to the pitch radius of the pinion (11) and that the eccentricity of the axis of the pin (19) with respect to the axis of the shaft (12) is equal to the pitch radius of the pinion (11).

Correct functioning of the mechanism shown in fig. 1 foresees the dynamic balancing of the cylindrical body (9) and of the organs connected to it, with respect to the axis of the shaft (2). In these conditions, if the shaft (2) is rotated in a certain direction and at a certain speed, the shaft (12) turns in the opposite direction and at double the speed with respect to its own axis, a traverse follows, according to an alternate straight-line movement of the pin (19); the movement of the pin becomes harmonic if the rotation of the shaft (2) takes place at a constant speed.

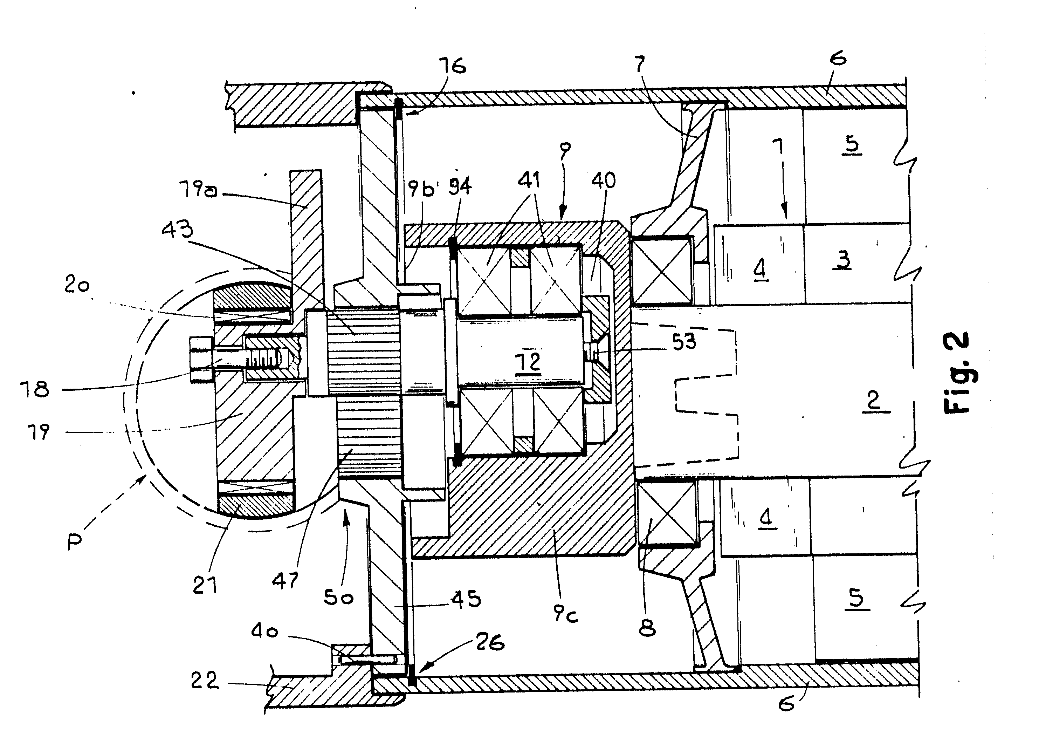

The construction version shown in fig. 2 involves some construction parts which are basically the same as those described with reference to fig. 1; an electric motor (1), a shaft (2), a rotor (3), a cooling fan (4), a stator (5) and a casing (6) to house the motor (1); the said casing (6) being constructed from a tubular extrusion which extends beyond the rotor (3) and is clamped by stay rods not shown, to the casing (22) of a compressor (50).

The part of the casing (6) which protrudes beyond the stator (5) has a fixed flange (7) which supports in rotation, by means of a bearing (8), a cylindrical body (9) coaxial to the shaft (2), to which it is made integral either by material continuity or by a cone coupling, indicated by a dashed line.

The cylindrical body (9) has a longitudinal housing (40), eccentric with respect to the axis of the body (9) and terminating in the head (9b) of the said body (9); bearings of a known type are positioned in the housing (40) and are intended to support in rotation a shaft (12), fitted with a pinion (43) which partially protrudes from the same housing (40) in correspondence with the head (9b). The extraction of the shaft (12)-bearings (41) unit from the housing (40) is prevented by means of known organs indicated by 53 and 54.

Between the head (9b) of the cylindrical body (9) and the compressor (50), a flange (45) is fitted which is clamped between the casings (6,22) by means of traditional construction devices, indicated by 26; the flange (45) has a crown gear (47) cut internally, on which the pinion (43) is engaged; the head of the pinion (43) protrudes beyond the flange (45) on the side of the compressor (50), in order to allow the clamping by the same, by means of screw organs (48), of a pin (19), mounted coaxially to the flange (15).

The pin (19) is hinged by means of rollers (20) to a rod (21) the ends of which are hinged to several pistons P (shown by dashed lines in the drawings), which together with the relative cylinders and connected valves (not illustrated) comprise the pumping unit of this compressor.

It should be pointed out that in order to transform the rotatory movement of the shaft (2) into alternate straight-line movement of the rod (21), the mechanism must satisfy the following requirements:

a) the pitch diameter of the crown gear (47) is double the pitch diameter of the pinion (43);

b) the eccentricity of the axis of the shaft (12) with respect to the axis of the cylindrical body (9) is equal to the pitch radius of the pinion (43).

For correct functioning of the device shown in fig. 2, it is necessary for the moving parts of the same to be dynamically balanced with respect to the axis of the cylindrical body (9); for this reason , the cylindrical body (9) is fitted with an eccentric mass (9c), intended to dynamically balance the cylindrical body (9)-shaft (12) and relative pinion (43)-bearings (41)-organs (53,54) unit,with respect to the axis of the cylindrical body (9), while the pin (19) is equipped with an eccentric mass (19a) intended to balance the pin (19)-organ (48) unit with respect to the axis of the shaft (12).

So that the direction in which the rod (21) moves is the correct one, it is necessary to adjust the angular positioning of the pinion (43) with respect to the crown (47); it is therefore necessary to define the angular positioning of the flange (45) with respect to the casing (16) and this obtained through the use of appropriate connecting pins (40).

The rotation in one direction of the shaft (2) of the motor (1) causes the rotation in the opposite direction and with double speed of the shaft (12)(which rotates eccentrically with respect to the axis of the cylindrical body 9) and the consequent alternate straight-line translation of the rod (21), which becomes a harmonic movement when the rotation of the shaft (2) is uniform.

In conclusion, it is necessary to describe the assembly of the device illustrated in fig. 1, which is carried out by proceeding as follows:

a) connect the casing (6) to the stator (5), with negative allowance;

b) mount the flange (7) on the shaft (2) by means of the bearing (8) and mount the rotor (3)(and relative fan 4) on the same shaft (2);

c) insert the shaft (12) in the housing (30) until the pinion (11) engages with the crown (10), so that the pin (19) is coaxial to the shaft (2);

d) the flange (7) is connected with the casing (6) so that the rotor (3) is positioned correctly with respect to the relative stator (5);

e) the flange (7) is positioned angularly with respect to the casing (22) by means of pins (24), integral with distance pieces (23) interspaced between the flange (7) and the casing (22), mated with holes (24a) made in the parts concerned with this positioning and at the same time, the pin (19) is inserted inside the rollers (20);

f) the casing (6) is clamped with the casing (22)(by means of stay rods not illustrated).

0069086

To disassemble the said unit, proceed in reverse order to that described above.

To assemble and disassemble the device as in fig. 2, proceed in the same way.

CLAIMS

1. Mechanism for the transformation of a rotatory movement into an alternate straight-line movement and vice-versa of the type comprising at least: a shaft with pinion, a fixed ring internally equipped with a crown gear meshed with the pinion and having a pitch diameter which is double the pitch diameter of the said pinion; first organs driven by an electric motor, intended to support in rotation the shaft of the said pinion so as to distinguish an eccentricity between the axes of the said shafts equal to the primitive radius of the pinion; second organs driven by the shaft with pinion, intended to motorise a rod of a suitable expander according to an alternate straight-line movement, in order to distinguish an eccentricity between the axis of the shaft with pinion and the axis of the rod, equal to the said radius; this mechanism being characterised in that the said first organs comprise a cylindrical body (9), mounted overhanging and coaxial to a corresponding end of the shaft of the said electric motor and with the relative head turned towards the said expander; the said cylindrical body (9) having an eccentric longitudinal housing with respect to the axis of the said body (9) and which ends externally at least in correspondence with the said head; the said housing being designed to receive the revolving support of the shaft with pinion so that the latter protrudes externally to mesh with the said crown gear and in that the said crown comprises a flange positioned between the said cylindrical body (9) and the said electric motor.

2. Mechanism as in the previous claim, characterised in that the said cylindrical body (9) has a longitudinal housing which ends externally on one side corresponding to the said head and on the other side laterally by means of a window (31).

3. Mechanism as in at least one of the previous claims, characterised in that the said second organs comprise a pin hinged with the said rod and clamped to the head of the shaft with pinion protruding from the said head of the said cylindrical body in such a way that the axes of the said cylindrical body coincide.

4. Mechanism as in at least one of the previous claims, characterised in that another fixed flange is provided, positioned between the said cylindrical body and the said electric motor, in order to support either directly or indirectly, the said cylindrical body.

5. Mechanism as in claim 1, in that the said second organs comprise a pin (19) clamped to the head of the said pinion so that it is coaxial to the axis of the said cylindrical body (9) and hinged with the said rod.

6. Mechanism as in claim 5, characterised in that the said pin (19) is equipped with an eccentric mass (19a), designed to dynamically balance the pin (19) in relation to the axis of the shaft of the said pinion.

7. Mechanism as in claim 1, characterised in that the said cylindrical body (9) is equipped with an eccentric mass for the dynamic balancing of the said first and second organs with respect to the axes of the same body (9).

8. Mechanism as in at least one of the previous claims, wherein the casing of the electric motor is clamped on the casing of the aforesaid expander, characterised in that the said casing of the electric motor contains the same mechanism and in that the said casing has the said fixed flange attached to it.

9. Mechanism as in the previous claim, characterised in that organs are provided for the angular positioning of the said flange with respect to the casing of the said expander, so as to distinguish a pre-determined direction for the alternate movement of the said rod.

10. Mechanism as in the previous claim, characterised in that the said organs for the angular positioning of the flange with resepct to the casing of the expander comprise at least three distance pieces interspaced between the said support and the casing of the expander, at least two of which are integral with corresponding pins inserted in corresponding holes in the said support and in the said casing in consequence of the clamping between the said casings of the said motor and the said expander.

Fig. 1

Fig. 2